# EUROPEAN PATENT APPLICATION

(11) **EP 0 228 158 A2**
(43) Date of publication of application: **08.07.1987**
(21) Application number: 86308079.2
(22) Date of filing: 17.10.1986
(51) Int. Cl.: B60N 1/12

(54) **Child's safety seat**

(30) Priority: 30.10.1985 GB 8526720; 24.03.1986 GB 8607296
(71) Applicant: ASE (UK) LIMITED, Carlisle Cumbria CA2 5HX (GB)
(72) Inventor: Anderson, Alexander Barrie, Wigton Cumbria CA7 0LW (GB); Nicod, Fredrick Charles, Brampton Cumbria CA8 2ND (GB)
(74) Representative: Ackroyd, Robert

(57) **Abstract**

The seat of Figures 1 to 5 is recline-adjustable by pivotation about a transverse axis at the top of the backrest (24). For adjustment, locking bolts (46) are freed by pulling a handle (39) (Figure 3) or pushing a panel (60) (Figure 4). The seat frames of Figures 2 and 7 are simply constructed, each largely from two lengths of tubing (11), (12) or (111), (112). Figures 6 and 8 shows a seat anchorage arrangement including stirrups (141) receiving a standard adult safety belt (142) and tensionable straps (140). Figures 9 to 11 show a seat in configurations for a small child (Figure 11) and a baby (Figures 9 and 10). Figures 12 to 14 and 17 show a seat which is lifted for pivotal adjustment, eyes (230) receiving a frame rail (213) allowing the adjustment. Figures 15 and 16 show an adjustment device with parallel rails (255) and a clamp (228). Figures 18 to 21 show a seat in configurations similar to Figures 9 to 11. The seat has provision for a three-point harness and has an integral buckle socket with remote release. Figure 22 shows an alarm system (511), (512), (514).

## Description

This invention relates to child's safety seats for use in vehicles, for example motor vehicles.

Some known child's safety seats are adjustable for inclination and/or height relative to the vehicle in which they are to be used. The adjustment of such seats is however troublesome and one aim of the present invention is to overcome this disadvantage. The invention also aims to provide a child's safety seat which can be used by babies and by small children throughout the early years of their lives.

The present invention is concerned with a child's safety seat for use in a vehicle; the seat comprising a seat member, conveniently a one-piece shell, having squab and backrest portions; frame means on which the seat member is mounted for movement relative thereto; and means for releasably securing the seat member against movement relative to the frame means at a selected relative position of the seat member and the frame means. Such a safety seat is referred to hereinafter as being "of the type described".

With such a seat, the seat member is selectively adjustable relative to the frame means between at least two relative positions of the two components. The position may include two positions in which the respective inclinations of the seat member relative to the fame means are different. This need not be the case however and the positions may, instead or in addition, include positions in which the height of the seat member relative to the frame means is different.

According to a first aspect of the present invention, there is provided a child's safety seat of the type described, which includes operating means for the securing means, the operating means having a manually-actuable member which, upon actuation, releases the securing means and which is located remotely from at least one part of the securing means.

With such an arrangement, the manually-actuable member can be actuated in a one-handed operation and is therefore more convenient than the operating members of known child's safety seats which are located adjacent respective latching devices at opposite sides of the seats and require simultaneous actuation by two different hands.

Moreover, the remote location of the manually-actuable member allows the location to be chosen solely for accessability and convenience of operation. One such location is at a central part of the forward edge of the squab portion of the seat member. Another is at a central part of the upper edge of the backrest portion. Other locations include a location at one or the other side of the safety seat.

In the first two locations mentioned, the manually-actuable member will usually be remote from all parts of the securing means which are positioned, for example, at each side of the safety seat. In the third location the operating means may, but need to, be arranged such that one part of the securing means is adjacent the manually-actuable member and another part of the securing means is located remotely therefrom.

When at the first location mentioned, the manually-actuable member is particularly easily reached by a driver or front-seat passenger of a motor vehicle on the rear seat of which the safety seat is mounted. The position of the seat member relative to the frame means can thus be adjusted in a one-handed operation by the passenger or the driver whilst occupying his or her front seat.

The frame means may comprise first and second spaced side members on which the seat member is mounted. In such constructions, the securing means may comprise first and second latching devices each engagable with a respective frame side member. These latching devices conveniently comprise bolts which are receivable in and withdrawable from apertures in the side members, withdrawal preferably taking place against the bias of resilient biassing means.

The manually-actuable member for release of the securing means may be of any convenient type but is preferably actuated by a pulling or a pushing movement. A pulling movement is however preferred, particularly when the member is adjacent the front edge of the seat squab, because the pulling action can be arranged to be accomplishable by a simultaneous manual squeezing action of the actuating member and an adjacent portion of the seat member. Thus, conveniently, the manually-actuable member releases the securing means with an action in which the manually-actuable member and an adjacent portion of the seat member are squeezed together. In this way, the securing means are released and the seat member engaged for adjustment of its position in a one-handed operation. In some embodiments of the invention, the push- or pull-member is located adjacent the front edge of the seat member squab portion and is connected by an operating means comprising one or more cables, or other elongate flexible elements, to bolts of the type already mentioned, one at each side of the seat and receivable in apertures in side members of the frame means. In other embodiments, the flexible elements are replaced by a linkage comprising rigid rods.

The seat member may be mounted on the frame means in any convenient manner. Thus, the mounting may be pivotable, for example about a transverse axis adjacent the top of the seat member backrest portion. Pivotation about such an axis provides a particularly convenient arrangement which is well-suited to adjustment from a front vehicle seat when the child's seat is on the rear vehicle seat. However, the mounting may be such that the seat member is slidable on portions of the frame means, conveniently on rollers or other rotary elements mounted on the seat member and engaging the frame means which are additional to the securing means and retain the seat member on the frame means whilst allowing sliding movement when the securing means are released. The retaining means may take the form of load-bearing pins positioned to adjacent the rotary elements but spaced therefrom across the said portions of the frame means.

In an arrangement in which the seat member is slidable, the frame means advantageously has, at each side, an upwardly extending portion, which is preferably rectilinear, and a substantially horizontal rectilinear portion, the portions engaging the seat member at upper and lower regions thereof respectively. With such an arrangement, it has been found that the seat member is particularly easily slid on the frame means, after release of the securing means, by a pushing or pulling action on the forward edge of the squab of the seat member.

In a second aspect, the invention provides a child's safety seat of the type described, in which the seat member is mounted on the frame means for pivotal movement about an axis extending transversely of the seat member backrest portion adjacent the upper end thereof, the securing means defining a plurality of relatively-pivoted positions of the frame means and seat member and the seat member being freed for movement from one relative position to another by a lifting movement of the seat member.

With such a seat, the recline of the seat member is adjustable by movement from one selected relative position of the seat member and the frame means to another.

The lifting movement of the seat member is conveniently produced manually by lifting of the forward edge of the squab portion of the seat member. The advantages mentioned above of one-handed operation from the front seat of a vehicle in which the safety seat is mounted on the rear seat are thus also obtained with this child's safety seat.

The lifting movement of the seat member may be provided for by elongate eyes positioned at the rear of the backrest portion of the seat member and receiving a transverse rail of the frame means.

The securing means conveniently comprise a slot in one of the frame means and the seat member and a projection on the other located in the slot and moveable relative thereto along an arcuate path during the relative pivotal movement of the frame means and the seat member, the said relative positions being defined by side arm portions of the slot which receive the projection in the defined relative positions.

Preferably, there is a slot and a projection at each side of the seat and, in a particularly preferred child's seat, the slots are defined in the seat member and the projections are in the form of studs on the frame means, to which studs anchoring straps of the child's seat are attachable, for example by respective manually-rotatable elements, such as hand wheels, screw-threaded onto the studs over end brackets of the anchoring straps.

According to a third aspect of the invention, there is provided a child's safety seat of the type described, the frame means comprising first and second spaced-apart side portions on which the seat member is supported for movement relative to the frame means between an upright and an inclined position, the seat member having two attachment pivots only with each side frame portion.

Advantageously, the securing means are located at least one of the attachment points and preferably comprise a pair of rails equally-spaced along their lengths and forming portions of the frame means whereby the rails can be releasably clamped between the clamping element and the protruding element.

According to a fourth aspect of the invention, there is provided a child's safety seat of the type described, in which the securing means comprise a pair of rails at at least one side of the seat member and forming portions of the frame means, the rails being spaced, preferably equally, along their length, an element protruding from the seat member into the space between the or each pair of rails, and a clamping element which can be secured to the seat member and has means whereby the rails can be releasably clamped between the clamping element and the protruding element.

The seat member is thus adjustable steplessly over a wide range of inclinations between more and less reclined limit positions.

In either case, the clamping means conveniently comprise a manually-rotatable element which is advantageously screw-threaded on a post projecting from the protruding element between the rails and passes through an opening in the clamping element.

Preferably, the rails are circular in section and the protruding and clamping elements advantageously have inclined surfaces which, in their clamping positions, contact the rails tangentially.

When one attachment between the seat member and the frame means is formed by clamping means as mentioned above, another attachment conveniently comprises a slot in one of the frame means and the seat member and a projection on the other located in the slot to guide the seat member relative to the frame means.

According to a fifth aspect of the present invention, there is provided a frame for a child's safety seat, the frame comprising first and second frame members formed from elongate material and each being shaped so as to have a mid portion and first and second terminal portions extending from the mid portion to respective ends of the frame member, the terminal portions of each member being secured adjacent their ends to the other member in such a way that mid portions of the first and second frame members form, respectively, an upper, rear transverse rail and a lower, front transverse rail of the frame and that the terminal portions of the frame members form left- and right-hand side structure of the frame.

The frame, in use, will support a seat member, for example a one-piece shell. The seat member may be either adjustably or non-adjustably mounted and may be demountable or not from the frame.

The elongate material is preferably tubular but may also be in the form of solid rods or bars.

A frame according to the invention has the advantage that both the first and second frame members are capable of being formed by simple bending operations, for example one carried out automatically by a "computer numerically controlled" (c.n.c.) tube bending machine. After bending, the frame members can be secured together very economically and quickly by making only four connections between the members, at the points of securement mentioned. The connections may be made by welding, bolting, or in any other way.

Advantageously, the terminal portions of one frame member each comprise a first path which is positioned to contact a support surface when the frame is supported thereon, and a second part which extends upwardly from the rearward end of the first part to the point of securement to the other frame member.

The terminal portions of the other frame member may provide guideways on which a seat member, for example a one-piece shell, can be mounted for sliding movement.

Preferably, the terminal portions of the first frame member are secured adjacent their ends to points on the terminal portions of the second frame member adjacent the junction of the terminal portions with the mid portion of the second member, the terminal portions of the second frame member being secured adjacent their ends to points on the terminal portions of the first frame member between their junctions with the mid portion of the first frame member and their free ends.

Child's safety seats are known, which in use, are placed on a passenger seat of a motor vehicle and are secured in the vehicle by means of the adult safety belt provided for an occupant of the seat. These safety seats are however often difficult to secure firmly in a vehicle since it is necessary to use the tensioning means of the adult safety belt for secure mounting of the safety seat.

With a view to overcoming this disadvantage, the present invention provides, in a sixth aspect, a child's safety seat for use in a vehicle, the seat having means for securement of the seat in a vehicle, the securement means comprising first and second tensionable elements extending from respective opposite sides of the seat to respective means for attachment to a run of a vehicle safety belt.

A safety seat of this type can be placed on a vehicle seat and secured to the vehicle by means of the safety belt provided for the occupant of the vehicle seat. A seat of this type has the advantage that the securement means are tensioned in directions parallel to the directions in which load is transferred to the safety seat in the event of a sudden deceleration of a vehicle in which the seat is secured.

A further advantage is that the seat can be secured in the vehicle without it being necessary to rely on the tensioning or length adjustment devices of the vehicle safety belt to achieve this. Fitting can be more convenient because the need to adjust any adjustment device of the safety belt after fitting of the child's safety seat can be avoided.

Conveniently, each tensionable element is an elongate flexible element such as a length of webbing. The elements are preferably tensionable by one or more devices provided in the elements for adjustment of their lengths.

The means for attachment to a safety belt may comprise loops through which the safety belt can be passed. Advantageously, the loops are in stirrup elements each having a rigid rectilinear portion for contacting one face of the safety belt.

If the safety belt is a lap belt only, the belt can be passed through the loops after unfastening of the buckle of the belt. In the case of the lap-and-diagonal belt, a length of the belt doubled-back on itself is passed through the loops with the buckle tongue part leading. In both cases, reception of the buckle tongue part in its socket secures the loops on the safety belt run.

A position in which a child's safety seat is mounted in a vehicle such that the occupant of the safety seat faces generally away from the backrest of a vehicle seat on which the safety seat is mounted (hereinafter a "forwardly facing position") is not th best position for babies and very small children, who are better protected from crash and other loads if in an oppositely-facing position (hereinafter a "rearwardly facing position"). It is preferable that a rearwardly facing position is also a reclined position, in which the baby or small child is cradled in the safety seat.

In a seventh aspect, the present invention provides a child's safety seat for use in a vehicle, the safety seat comprising a child's safety seat for use in a vehicle, the safety seat comprising a seat member having squab and backrest portions, support means which allow the seat member to be supported on a vehicle seat in a rearwardly-facing position and means permitting securement of the so-supported seat member in a vehicle, the securement means comprising means for engagement with an adult seat belt provided for an occupant of a seat on which the seat member is supported and the support means comprising a U-shaped member which is removably connected at its free ends to the seat member at the rear of its backrest portion, preferably by the free ends of the U-shaped support member being removably receivable in sockets in the backrest portion.

So that the child's safety seat can be used for a larger child in a forwardly-facing position (as hereinbefore defined), the present invention also provides a frame on which the above-mentioned seat member is removably mountable in a forwardly-facing position, means being provided whereby the fame and seat member can be secured in a vehicle. A seat of considerable versatility is thus provided, which can be used throughout the early years of the child's life and thus avoids the need for expensive replacement as the child grows.

To assist accommodation of a small child in the seat member of the safety seat, the seat member preferably has one or more removable portions for adjustment of the internal size of the seat member.

In an eighth aspect, the present invention provides a child's safety seat which has a seat member having squab and backrest portions and a harness for restraining an occupant of the seat, the harness having lap and diagonal portions which extend to a tongue part of a buckle, the tongue part being receivable in a socket part incorporated in the seat member. A simple restraint harness with fewer parts than the conventional harness with pairs of shoulder and lap straps is thus provided.

According to a ninth aspect of the present invention, there is provided a child's safety seat which has means for its being mounted in a vehicle selectively in a rearwardly facing position and in a forwardly facing position, the safety seat comprising a seat member which has squab and backrest portions providing respective child-support surfaces, the seat member having first and second conditions in which the child-support surfaces of the squab and backrest extend generally in planes which make respectively greater and lesser angles with each other.

In its first condition, the squab support surface can, in use of the safety seat, conveniently be orientated to slope downwardly in the direction away from the backrest portion. This orientation makes the seat particularly suitable for occupation by a baby or very small child, especially when the seat is in its rearwardly facing position. In its second condition, the squab support surface can, in use of the safety seat, conveniently be orientated to slope downwardly in the direction towards the backrest portion. This orientation renders the seat suitable for occupation by a larger child, especially when the seat is in its forwardly facing position.

The angles between the squab and backrest in the first and second conditions are preferably in the respective ranges of 110 to 130 degrees and 85 to 105 degrees. Optimum angles are about 120 degrees and about 95 degrees.

The two conditions of the support surface are advantageously attainable by means of a removable squab portions which can be secured selectively in the seat member in first and second positions. Conveniently, the removable portion has a wedged shape and is turned through approximately 180 degrees between its two positions.

Safety seats of the present invention which are intended for use rearwardly facing positions preferably include releasable restraint means for the occupant, the restraint means passing, in use, around the front of the occupant between hips and armpits to restrain the occupant against movement out of the seat member.

The restraint means preferably comprise a band of fabric or other flexible material which is secured to the seat member.

The band is conveniently in two parts which can be joined together releasably to secure the occupant in the seat. Securement of the two parts may be by any releasable fastener, such as a buckle, but is preferably formed by a touch-and-close fastener, for example that sold by Selectus Limited under the trade mark VELCRO.

The two band parts are conveniently secured to the seat member at respective opposite sides of a backrest portion of the member.

A safety seat according to the eighth aspect of the invention is advantageously provided with alarm means for giving an alarm signal when the buckle parts are separated, the alarm means preferably being disabled when the seat is unoccupied by means responsive to the presence of an occupant in the seat.

The invention provides in a tenth aspect a child's safety seat having a seat member, preferably a one-piece shell, having a part shaped for occupation by a baby or child, the seat including means for selective alteration of the size and/or the shape of the occupation part of the seat member. Again, the seat can thus be made suitable for use by babies and children of a range of sizes.

The said means may comprise one or more removable members, preferably cushion members, the absence and presence of which modifies the width of the seat member in the region occupied by, for example, an occupant's head or the torso of the occupant.

According to an eleventh aspect of the present invention, there is provided a child's safety seat comprising a seat member, conveniently a one-piece shell, and frame means on which the seat member can be detachably mounted, the seat member being retained on the frame means by means comprising an abutment at one side of a frame part and a retaining member at the other side of the frame part, the retaining member being movable between first and second positions in which the shell is respectively retained on the frame means by the frame part being trapped between the retaining member and the abutment and is removable from the frame means.

The retaining member is preferably removable from the seat in its second position.

Conveniently, the retaining member comprises a retaining pin, which can be inserted into an aperture in the seat member, and means for releasable engagement with the seat member.

The means for releasable engagement conveniently comprise a peg on one of the retaining and seat members and an aperture in the other member, the peg being insertable into the aperture and co-operable therewith to produce the releasable engagement.

Advantageously, the peg has a head portion and a thinner shank portion, the head portion being dimensioned to pass through a first part of the aperture and being moved to a second part of the aperture by movement of the retaining pin, the second aperture part being large enough to receive the shank of the peg but not large enough to allow all the head to pass through, and the aperture parts being joined by a waisted portion through which the shank can pass against a resistance when being moved between the first and the second apertures parts.

Safety restraint systems for use by children in motor cars are subject to conflicting requirements in that they must fasten securely in a manner which prevents inadvertent or untimely release by the child, so that the system is rendered ineffective, whilst not being so difficult to release that any problem is presented to an adult when the child has to be removed, as from a motor car after an accident.

The invention accordingly provides in a twelfth aspect a child's safety restraint system for use in a vehicle, the system comprising restraint means, a sensor for sensing whether or not the restraint means is in use, and an indicator responsive to the sensor to indicate whether or not the restraint means is in use.

The system of the invention thus allows the use of restraint means being a buckle or other fastening means of a kind which can be conveniently operated and which may be of the kind conventionally used in such restraint means except in as far as it may be associated with the sensor. The vehicle driver or other person responsive to the indicator can be confident that the child is secured by the restraint means as long as no indication is given to the contrary, or as long as a positive indication of securement is given, and can take appropriate action immediately when it is indicated that the restraint means is unfastened, or is no longer in use, when this is not desired.

The restraint means will be typically employed on a rear seat of a passenger motor car and the indicator can be conveniently located on or in the vicinity of the vehicle dashboard. Appropriate wiring interconnects the vehicle battery, the sensor and the indicator. The system, or at least such wiring, is preferably installed in the vehicle as originally manufactured. Use can be made of any added or original wiring which extends between the battery, the dashboard and the region of the rear seat, where the system of the invention is added to a vehicle not including it as original equipment.

The restraint means can be of any suitable kind for example a seat belt system or harness by which the child is secured in a child's seat or on a booster cushion fixedly or adjustably received on the vehicle seating, to which it may be held by specifically provided straps or the like, and/or by an adult seat belt systems associated with the seating. Such a harness incorporates a buckle connecting together the ends of lap or lap and shoulder belts, and the sensor can be constituted as a switch which changes condition when the buckle is fastened and unfastened. the indicator conveniently comprises a dashboard lamp which remains unilluminated as long as the restraint means is secured but which becomes illuminated continuously or intermittently, and either permanently or for a predetermined period, when the restraint means is unfastened. An audible indicator can be employed instead or additionally. Means, for example a pressure sensor suitably positioned, may also be provided which disable the sensor when the restraint is not in use.

Embodiments of the invention will now be described by way of example with reference to the drawings of this specification, in which:
Figure 1 is a side view of a first child's safety seat,
Figure 2 is a perspective view of the frame of the seat of Figure 1,
Figure 3 is an underneath plan view of part of the seat of Figure 1,
Figure 4 is a perspective view of part of a modified version of the seat of Figure 1,
Figure 5 is an underneath plan view of part of a further modified version of the seat of Figure 1,
Figure 6 is a side view of a second child's safety seat,
Figure 7 is a perspective view of the frame of the seat of Figure 6,
Figure 8 is a perspective view of part of the seat of Figure 6 secured in a motor vehicle,
Figure 9 is a perspective view of a third child's safety seat in a first position of use,
Figure 10 is a side view of the seat of Figure 9 in the same position of use,
Figure 11 is a perspective view of the seat of Figure 9 in a second position of use.
Figure 12 is a side view of a fourth child's safety seat,
Figure 13 is a view, partly in section, of a part of the seat of Figure 12,
Figure 14 is an exploded perspective view of a further part of the seat of Figure 12 and an anchoring strap therefor,
Figure 15 is a side view of a fifth child's safety seat,
Figure 16 is view, partly in section, of a part of the seat of Figure 15, and
Figure 17 is an exploded perspective view of a part of a seat which is a further modified version of the seat of Figure 1,
Figures 18 and 19 are figures corresponding to Figures 9 and 11 and showing a modified version of the third safety seat,
Figure 20 is a side view, partly in section, showing a buckle socket part of the seat of Figures 18 and 19,
Figure 21 is an exploded perspective view of a device for securing the shell of the modified third seat to its frame, and
Figure 22 is a front view of a sixth child's safety seat, with associated circuitry shown schematically.

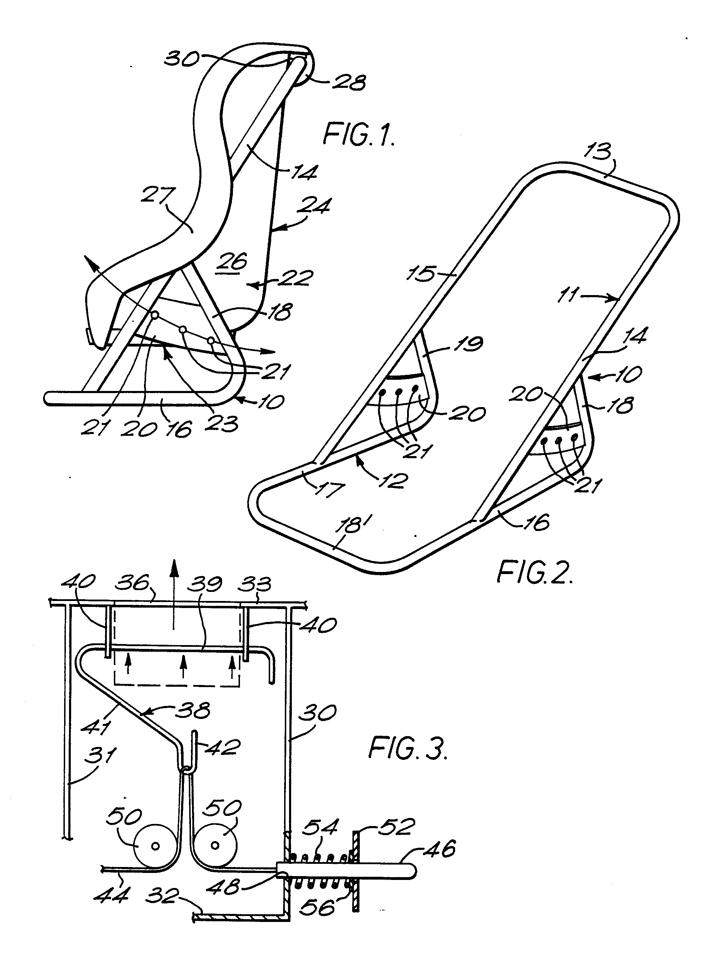

The first safety seat has a frame 10 which is shown most clearly in Figure 2. The frame 10 consists of two tubular steel members 11, 12 which, after having been bent to shape, are welded or bolted together. The first frame member 11 has a mid portion, which forms an upper, rear transverse rail 13 of the seat frame, and terminal portions which form left-and right-hand side rails 14, 15 of the frame. The free, lower ends of the terminal portions are welded or bolted to terminal portions of the second frame member 12 which also has a mid portion, forming a lower, front transverse rail 18' of the frame. The terminal portions of the second frame member extend rearwardly from the ends of the front transverse member 18 so that first parts of the terminal portions form left- and right-hand base rails 16, 17, for contacting a support surface such as a vehicle seat squab, and then curve upwardly and forwardly so that second parts of the terminal portions form left- and right-hand bracing struts 18, 19 which are welded or bolted at their free ends to the side rails 14, 15 about two-fifths of the way up the side rails from the front transverse member 18.

It will be seen that both frame members are easily bent to their simple shapes in simple operations on a tube bending machine, preferably a c.n.c. bending machine. The entire frame so far described is thus made from just two bent tubular members which are secured together by just four welds or bolted connections. These features give a particularly simple and easily-constructed seat frame.

Between each bracing strut 18, 19 and the lower part of its respective side rail 14, 15 a plate 20 forming part of the securing means of the safety seat extends. Each plate 20 has three apertures 21 which are arranged spaced along an arc of a circle centered on an axis extending longitudinally of the upper transverse rail 13 of the frame 10.

The seat further includes a shell 22 which is a one-piece moulding of plastics material and which has a squab portion 23, a backrest portion 24 and left- and right-hand side wall portions 26. An out-turned lip 27 extends around the edge of the shell 22. At its upper end, the backrest portion 24 has two brackets 28 which are detachably secured beneath the adjacent portion of the lip 27 and by means of which the shell 22 is secured to the frame 10 of the seat. For this, each detachable bracket 28, together with an adjacent portion 30 of the backrest of the shell 20 forms an eye through which the upper transverse rail 13 of the frame passes. The shell 22 is thus pivotable about the said axis extending longitudinally of the upper rail 13 between positions in which it is more and less reclined. Three such positions are defined by the apertures 21 in the securing plate 20, Figure 1 showing a position in which the shell is in its most upright position and two further positions in which the shell is more reclined being attainable.

Figure 3 of the drawings shows part of the securing means of the seat. The underneath of the squab portion 23 of the shell 22 has integrally-moulded therewith left- and right-hand side 30, 31 and rear 32 downwardly-extending walls which, together with a portion 33 of the lip 27, form a compartment is which the operating means of the securing means of the seat are located. The lip portion 33 has an aperture 36 through which a manually-actuable element 38 of the operating means is accessible. The manually actuable element 38 is a generally V-shaped piece of wire, one limb 39 of which is received in slotted brackets 40 formed integrally with the shell 20 and extending rearwardly from the lip portion 33 at each side of the aperture 36. The other limb 41 of the V-shaped element 38 is formed at its free end into a hook portion 42, around which a cable 44 passes. The two ends of the cable 44 are secured to respective latching bolts 46 which protrude through apertures 48 in the side walls 30, 31 of the compartment. To guide the cable 44 from the bolts 46 to the hook portion 42 of the V-shaped element 38, two cylindrical capstans 50 are moulded integrally with the seat shell 22.

Each bolt 46 also protrudes through an apertured bracket 52 moulded integrally with the shell 22. Portions of the bolts 46 projecting beyond the brackets 52 are receivable in the apertures 21 in the plates 20. A respective helical compression spring 54 acts between the outer surface on each compartment side wall 30, 31 and an abutment 56 on each latch bolt 46 to bias the bolts 46 into their latching positions in which they are received in respective apertures 21.

To adjust the inclination of the shell 22 of this child's safety seat, the limb 39 of the manually actuable element 38 is gripped manually through the aperture 36 and pulled towards the forward edge of the seat squab portion 23. This pulling movement is facilitated if the limb 39 and the shell 32 adjacent the aperture are simultaneously gripped manually and squeezed together. The movement of the manually actuable element 38 causes the cable 44 to be drawn around the capstans 50 and the latching bolts 46 to be pulled inwardly against the bias of the springs 54. This frees the outer ends of the bolts 46 from their respective apertures 21 and allows the shell 22 to be pivoted about its axis of pivotation. When the shell is in a position in which the bolts 46 are aligned with a different pair of apertures 21 in the plates 20 the element 38 is released and the bolts 46 move under the influence of the springs 54 to be received in the new apertures 21. Release of the element 38 prior to alignment of the bolts 46 and apertures 21 will of course result in the bolts springing into the apertures when alignment is attained.

The entire adjusting process described can be carried out by a person using one hand only inserted through the aperture 36 to operate the securing means and, simultaneously therewith, to adjust the inclination to the seat shell.

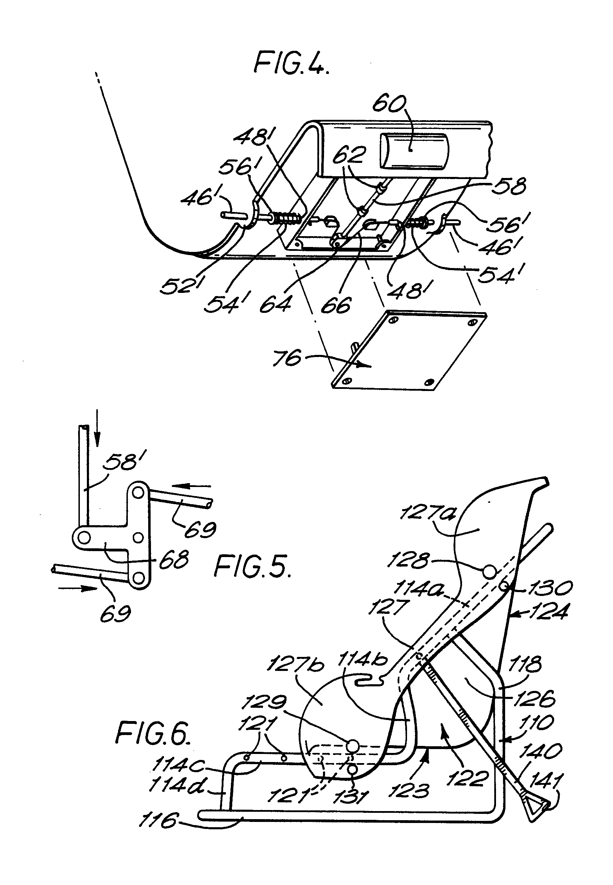

In the modified seat shown in Figure 4, the manually actuable element of Figure 4 is replaced by a rod 58 and a push button 60 attached to the forward end of the rod 58. The rod is slidable in guides 62 provided on the lower surface of the seat squab 23 and, at its rear end, has a guide 64 around which a cable 66 passes. The ends of the cable 66 are attached to latching bolts 46' in a similar manner to that described above for the seat of Figures 1 to 3. The bolts and other parts of this seat functionally equivalent to parts of the unmodified seat are indicated by appropriate primed reference numerals. In this seat, the bolts 46' are releasable by a manual pushing action on the button 60 at the forward end of the rod 58. Adjustment can again be a one-handed operation.

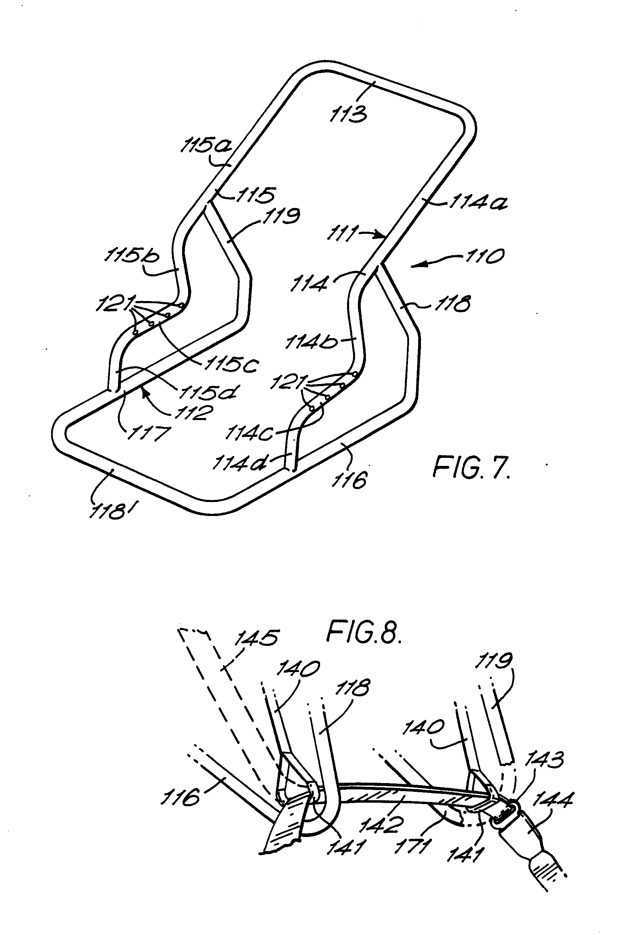

Figure 5 shows a modification of the operating means of Figure 4. Here the cable 66 is replaced by a bell crank 68, pivotally mounted on the lower surface of the seat squab 23 and first and second operating rods 69 which are attached to respective locking bolts at their outer ends and move in the directions of the arrows when an actuating rod 58' replacing the rod 58 is moved as indicated in Figure 5.

In the seats of Figures 1 all the compartments housing the operating means may be closed by a plate such as the plate 76 shown in Figure 4.

A second child's safety seat is shown in Figures 6, 7 and 8. The seat has a frame 110 which can be seen most clearly in Figure 7. The frame 110 consists, of two tubular steel members 111, 112 which, having been bent to shape, are welded or bolted together. Again, the first frame member 111 has a mid portion, which forms an upper, rear transverse rail 113 of the frame 110, and terminal portions which form left- and right-hand side rails 114, 115. The free, lower ends of the terminal portions are again welded or bolted to the terminal portions of the second frame member 112 which also has a mid portion, forming a lower, front transverse rail 118' of the frame. The terminal portions of the second frame member extend rearwardly from the ends of the front transverse member 118 so that first parts of these terminal portions form left- and right-hand base rails 116, 117, for contacting a support surface such as a vehicle seat squab. At the rearward ends of the base rails 116, 117, the terminal portions of the second frame member turn through a right angle and then extend perpendicularly to the base rails 116, 117 before turning through approximately 40 degrees to meet the side rails 114, 115 where the free ends of the terminal portions of the second frame member are bolted or welded to the first frame member 111. In this way, bracing struts, 118, 119 extending between the base rails 116, 117 and the side rails 114, 115 are formed.

The side rails 114, 115 of the frame 110 extend to the forward ends of the base rails 116, 117 of the frame where they are bolted or welded to the second frame member 112. The side rails 114, 115, in contrast to the side rails 14, 15 of the frame 10 shown in Figure 2, are however formed to have upper rectilinear portions 114a, 115a which are inclined to the base rails 116, 117 at an angle of about 45 degrees, near-vertical portions 114b, 115b, horizontal portions 114c, 115c and final vertical portions 114d, 115d. Each horizontal side rail portions 114c or 115c has a set of four spaced apertures 121, the function of which is explained hereinafter.

The frame 110 supports a seat shell 112 which is a one-piece moulding of plastics material. The shell 112 has a squab 123, a backrest 124 and spaced side walls 126. A lip 127 extends around the periphery of the shell 124 and is formed at the upper and lower ends of the sides of the shell into flaps 127a, 127b of substantial depth.

Between the flaps 127a, 127b and the respective sides 128 of the seat shell 126, an upper and a lower guide roller 128, 129 is rotatably mounted at each side of the seat shell. The upper rollers 128 engage the inclined portions 114a, 115a of the side rails, which portions provide guideways for the rollers. The lower rollers 129 engage the horizontal portions 114c, 115c of the side rails and are guided thereby. A retaining pin 130 extends across the space between the upper side flap portions 127a and the sides 126 of the shell at positions spaced across the inclined portions 114a, 115a of the side rails from the upper rollers 128. Similar retaining pins 131 project inwardly from the lower side flap portions 127b and, together with the upper pins 130 retain the shell 122 on the frame 110.

The position of the shell 122 relative to the frame 110 is adjustable by means of locking bolts (not shown) which may be operable in the same way as the bolts shown in any of Figures 3, 4 and 5, the bolts being receivable in apertures 121 in respective ones of the horizontal side rail portions 114c, 115c. It should be noted that the combination of the inclined side rail portions 114a, 115a and the horizontal side rail portions 114c, 115c engaged by the upper and lower guide rollers 12, 129 gives rise to a particularly easily adjusted seat shell which can be moved between its more and its less reclined positions with little effort and with one hand pushing or pulling of the forward edge of the squab 122 whilst, when necessary, operating the latching means of the seat.

The seat shown in Figure 6 is secured in a vehicle by means of anchoring straps 140 each secured at one end to a respective inclined side rail portion 114a or 115a of the frame adjacent the lower end of the rail portion. Each strap 140 incorporates a length-adjustment device (not shown) and has, at its end distant from the seat frame, a stirrup-shaped member 141.

Figure 8 shows in more detail the way in which the safety seat is secured on a normal passenger seat of a vehicle. Securing is achieved by placing the safety seat in position on the vehicle seat squab and then passing the standard adult safety belt provided for the occupant of the vehicle seat through the stirrup members 141 of the anchoring straps 140. When the adult safety belt consists of a lap belt only, the lap belt (usually terminating in a buckle tongue) is passed through the stirrups 141 and between the shell 122 and frame 110, before its tongue is secured in the buckle socket part in the usual way. The anchoring straps 140 are thus attached to the lap strap and the safety seat can be securely fastened in the vehicle by tensioning of the anchoring straps 140 by manipulation of their respective length adjustment devices. Figure 8 of the drawings shows, in solid lines, a lap strap 142 as just described, extending to a buckle tongue 143 which is received in a buckle socket 144. The figure also shows, in dashed lines, an alternative arrangement when the adult safety belt in question is a lap and diagonal belt. In this case, the portions of the lap and diagonal belts extending to the buckle tongue are doubled back to lie in contact with each other before this double-backed portion is passed through the stirrups 141. The tongue part of the buckle is then received in the socket part in the usual way. Figure 8 shows, in dashed lines, the position of the diagonal belt 145 in such an arrangement. The child's seat is thus again attached to the adult safety belt and can be brought into firm engagement with the vehicle seat by adjustment of the length adjustment devices of the anchoring straps 140.

It will be appreciated that in both these arrangements described, the tension in the anchoring straps is applied in a direction parallel to that in which load is transferred to the child's seat in the event of an accident or sudden deceleration of the vehicle. The arrangement is particularly convenient because the length adjustment devices of the anchoring straps 140 can be positioned for easy manipulation after positioning of the safety seat, there being no need for any adjustment after the child's seat has been mounted in the vehicle.

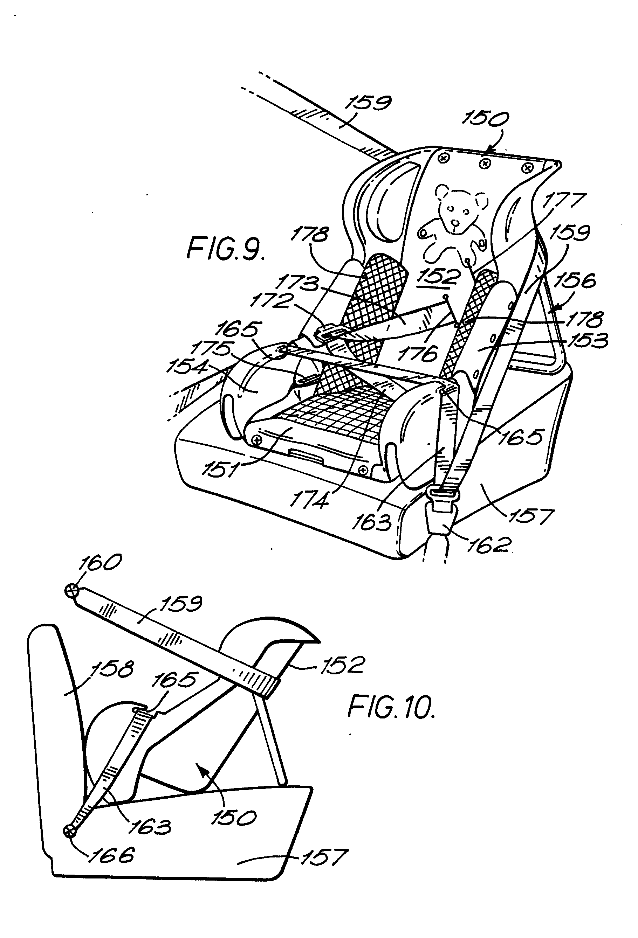

Figures 9, 10 and 11 show a third child's safety seat. The seat includes a shell 150 which is again a one-piece moulding of plastics material and has a squab 151, a backrest 152, and left- and right-hand sides 153, 154. At the rear of the backrest portion 152, the shell 150 has a pair of integrally-moulded sockets (not shown) into which the ends of a U-shaped support frame 156 can be received. The sockets are orientated such that the support frame 156 extends from the shell in the manner shown in Figures 9 and 10.

The shell 150 and frame 156 can be mounted on a vehicle seat in a position in which a baby or small child occupying the safety seat is facing generally towards the backrest 158 of the vehicle seat. This is shown in Figures 9 and 10, the shell being propped by the support member 156 which extends from the backrest 152 and rests at its lower end on the squab 157 of the vehicle seat. The shell is retained in this position by use of a standard lap and diagonal safety belt. The diagonal portion 159 of the belt passes from its shoulder anchorage 160 around the rear of the backrest portion 152 of the shell 150 to the safety belt buckle 162. From here the lap portion 163 extends across the squab 15 of the shell, passing over the side walls 154 on which it is retained in notches 165, to the lower anchorage 166.

The shell 150 is fitted with a lap and diagonal harness which includes a buckle having a tongue part 172 where the diagonal 173 and lap 174 portions meet and a socket part 175 which is formed in the seat shell 150, either by being moulded integrally therewith or by being defined in an element fitted to the shell. In each case, additional latching components are provided. The backrest portion 152 of the shell 150 has two spaced slots 176, 177 through a selected on of which the diagonal portion 173 of the harness belt may pass. In this way, the height of the upper end of the diagonal portion 173 can be adjusted to suit the harness to a smaller or a larger baby or child.

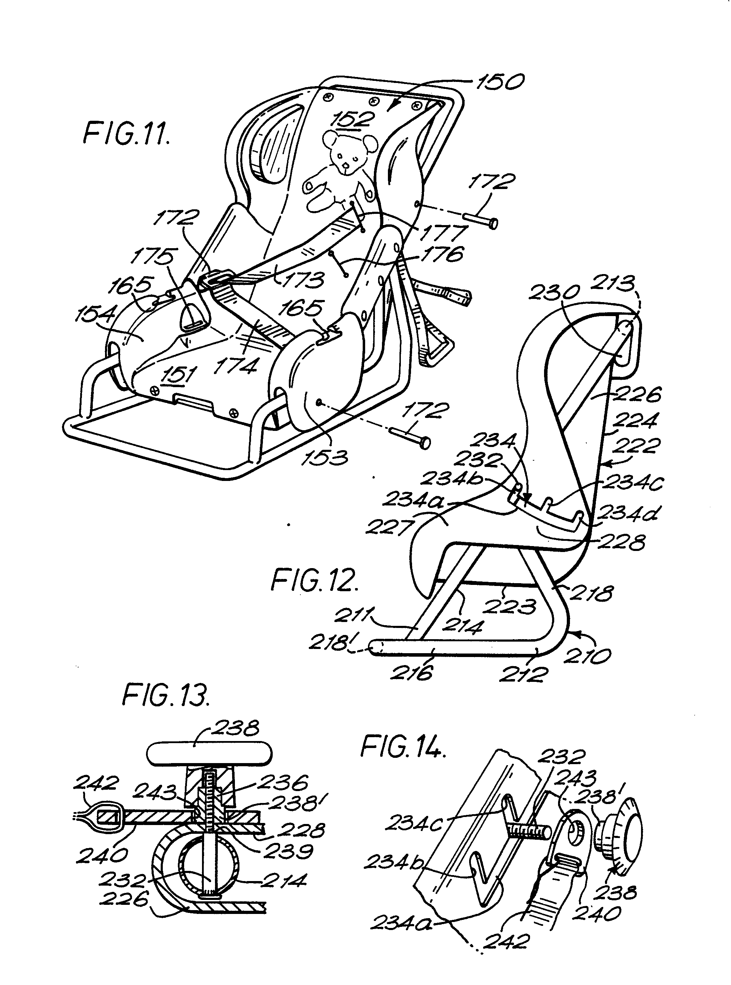

To accommodate a baby or small child, particularly in the rearwardly facing position, the shell 150, as shown in Figure 9, includes detachable bolster cushions 178 which are detachably secured in the shell on the inside surfaces of the shell side portions 153, 154. These cushions 178 prevent a small child from moving undesirably from side to side in the shell. In Figure 11, the cushions have been removed to accommodate a larger child.

The shell 150 may also be used, for a larger child, in combination with a frame 170 in the way shown in Figure 11 of the drawings. The frame shown is similar to that shown in Figures 6 and 7 of the drawings but, in other seats, may be similar to that shown in Figure 1, or of any other appropriate configuration. The frame of Figure 11 is secured by anchoring straps which are the same as those described with reference to Figures 6 and 8. Any other convenient anchoring arrangement can be used. The shell 150 may be adjustable relative to the frame in any of the ways described hereinbefore, or otherwise. The shell, when mounted on the frame, is used in a forwardly-facing position, similarly to the seats described with reference to Figures 1 to 8.

The shell 150 is retained on the frame 170 by four pins 172 (two of which are visible in Figure 11) which are passed through apertures in the shell and the frame and are secured against withdrawal by split pins or similar devices.

Figure 12 of the drawings is a side view of a fourth child's safety seat embodying the present invention. The seat has a frame 210 which, like the frame 10 of the first seat shown in Figure 1, is formed from two tubular steel members 211, 212 which are bent identically to the members 11, 12 of the seat of Figure 1 to form front and rear transverse rails 218', 213, left- and right-hand side rails 214, left- and right-hand base rails 216 and left- and right-hand bracing struts 218.

The seat also has a seat member 222 in the form of a one-piece shell moulded from plastics material and having a squab portion 223, a backrest portion 224 and left- and right-hand side wall portions 226. An out-turned lip 227 extends around the edge of the shell 222 and widens at each side into left- and right-hand flap portions 228. These portions extend parallel to the respective side walls 226 of the shell with portions of the respective side rails 214 and bracing struts 218 located between the flaps 228 and the side walls 226.

The shell 222 is secured to the frame 210 by the upper transverse rail 213 of the frame passing through a pair of elongate eyes 230 formed one at each side at the rear of the backrest portion 224 of the shell. The eyes 230 have a greater extent than the diameter of the rail 213 in an approximately vertical direction and therefore allow the shell 222 to be lifted relative to the frame 210.

At a point just above the junction of each bracing strut 218 with its respective side rail 214, a stud 232 passes outwardly through aligned apertures in the side rail 214 and protrudes therefrom through a slot 234 formed in the respective side flap 228. The two slots 234 are aligned with each other and each is approximately E-shaped, having a main portion 234a and three side arm portions 234b,c,d extending therefrom in directions approximately parallel to the respective side rail 214 of the frame 210 (see Figure 14). The slots 234 allow the shell 222 to pivot about an axis extending longitudinally of the upper transverse rail 213, reception of the studs 232 in corresponding pairs of the side arm portions 234b,c,d defining three different relative positions of the shell and frame in which the degree of recline of the shell is different.

A threaded end portion of each stud 232 (see Figure 13) extending outwardly beyond its respective side flap 228 carries a handwheel 238 which is secured non-rotatably to a stepped boss 236 which has a larger diameter portion 238' which is received in an aperture 243 in an attachment bracket 240 of an anchoring strap 242 of the safety seat. A portion of each stud 232 narrower than the boss 236 is received in the respective slot 234 so that the bosses 236 and the handwheel 238 are capable of being tightened onto the side flaps 228 to hold these securely against shoulders 239 on the studs 232 lying inwardly of the flaps 228. In this way, the shell 222 is secured against movement relative to the frame 210 at a selected relative position of the shell and the frame.

The adjustment of the degree of recline of the safety seat will now be described, it being first assumed that the studs 232 are located in the slot side arm portions 234b and the shell is therefore in its most upright position. To adjust the shell position, the handwheels 238 are first rotated to release their clamping action on the brackets 240 and the side flaps 228 of the shell. The shell can then be raised in order to move the studs 232 from the side arm portions 234b of the slots 234 into the main portions 234a. The elongate shape of the eyes 230 allows this lifting action to take place. It is now possible to pivot the shell 222 about the axis extending along the rear rail 213 of the seat frame 210 and to align the studs 232 with further selected side arm portions 234c or 234d, as desired. The shell 222 will now drop downwardly so that the studs 232 are received in the desired side arm portions and the shell will thus move to a more reclined position. The handwheels 238 can then be tightened to clamp the shell in the new position.

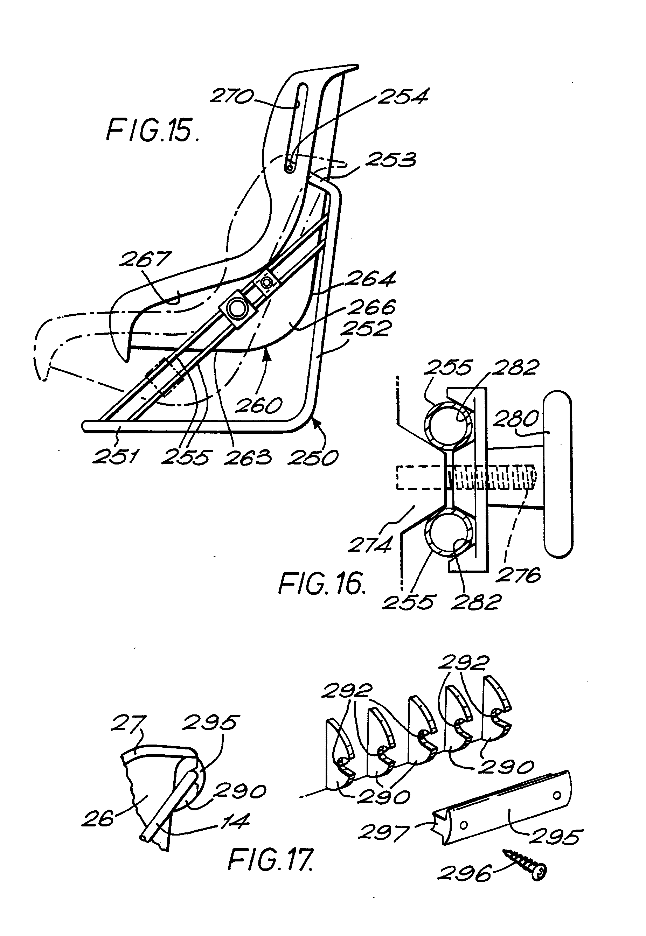

The seat shown in Figure 15 of the drawings has a frame 250 which has left- and right-hand base rails 251 and left- and right-hand upright portions 252. A lower transverse member which is not visible in Figure 15 extends between the forward ends of the base rails 251. At their upper ends, the upright members 252 have cranked portions 253 which extend forwardly and upwardly and have outwardly-extending studs 254 adjacent their free ends. At each side, the frame 250 has a pair of equally-spaced guide rails 255 which extend parallel to each other between the forward ends of the base rails 251 and the upper ends of the upright members 252.

The seat also includes a one piece shell 260 moulded from plastics material and having a squab portion 263, a backrest portion 264, side portions 266 and a lip 267 which extends around the edge of the shell. At each side, the lip 267 has adjacent the upper end of the backrest portion 264 a slot 270 which extends substantially parallel to the upright members 252 of the frame and receives a respective one of the studs 254 on the cranked side member portions 253.

Each side portion 266 of the shell 260 has an integrally-moulded frusto-conical boss 274 (see Figure 16) which projects between the adjacent pair of guide rails 255 and has secured in it an axially-extending threaded stud 276 which extends beyond the rails and passes through a bore in a clamping member 278. The outer end of the threaded stud 276 is fitted with a complementarily-threaded handwheel 280. Each clamping member 278 is formed with a parallel pair of sloping-sided grooves 282 which receive the guide rails 255 so that the walls of the groove lie tangentially to the rails 255.

The seat shown in Figure 15 is anchored in a vehicle by attachment of anchoring straps, fitted with attachment brackets such as are shown in Figure 13, to attachment studs 284 which are fitted to plates 285 secured to extend between the guide rails 255.

To adjust the position of the shell, the handwheels 280 are rotated to release the clamping members 278 from engagement with the guide rails 255 and the shell is then moved to a desired new position and the hand-wheels re-tightened. The shell is adjustable for degree of recline between a most-upright position shown in full lines in Figure 15 and a most-reclined position shown in dashed lines. During this movement, the studs 254 are guided by the slots 270.

Figure 17 of the drawings shows a modification of the seat of Figure 1, in which the detachable brackets 28 and adjacent seat shell portions 30 are replaced by a securing element 295 and a series of five outwardly extending ribs 290 which are moulded integrally with the shell 222 and which even have a recess 292 which receives the upper rail 13 of the seat frame 10. The rail 13 is retained in the recess 292 by means of the securing element 295 which is screwed by screws 296 to the outer pair of ribs, the clamping member 294 having a stem portion 297 which protrudes into the recesses 292 and has a concave end surface 297 which is a snug fit with the rail 13.

The seat shown in Figure 1 of the drawings is in a condition similar to that shown in Figure 9 and the features common to the two seats and their securing adult safety belts will not be described here in detail. These features are indicated in Figure 1 by reference numerals which are increased by 200 compared with the corresponding reference numerals of Figure 9.

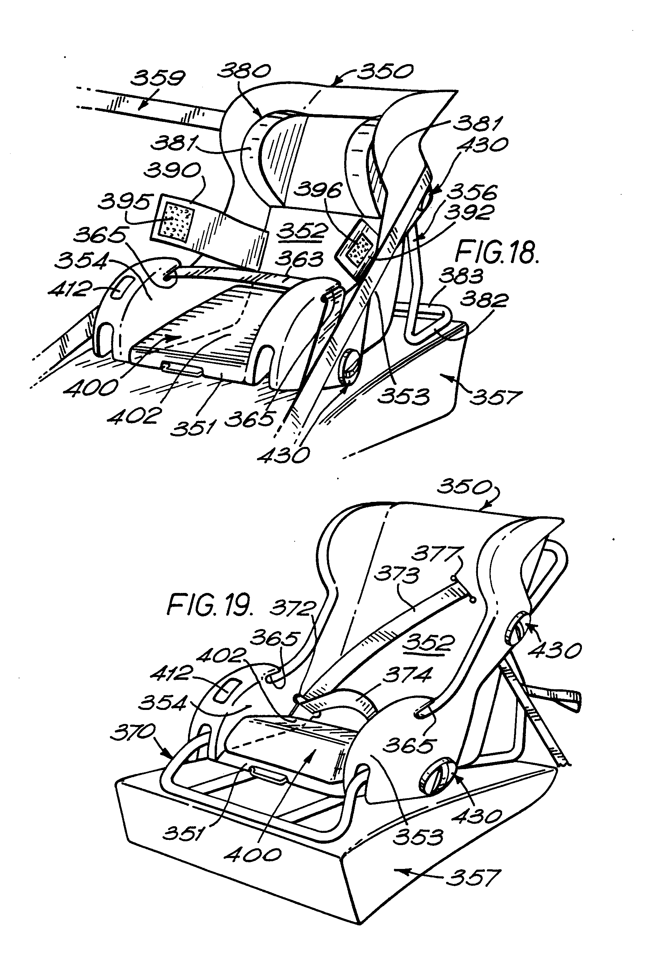

The seat of Figure 18 differs from the seat of Figure 9 in that it has a removable head support cushion 380 with side bolsters 381. The cushion can be releasably secured to the backrest 352 of the shell 350 in order to reduce the internal size of the shell, particularly the width, in the region of the upper part of the backrest 352 where the head of a baby or child is positioned in use of the seat. The bolster cushions 178 of the seat of Figure 9 are omitted in the Figure 1 seat but could equally well be provided, as could the head support cushion 380 in the Figure 9 seat. The modified seat of Figure 18 is further different from the Figure 9 seat in that the intermediate limb of the U-shaped support frame 356 is formed with two portions 382 which extend perpendicularly to a central portion 383 of the intermediate limb.

In place of the lap and diagonal harness of the Figure 9 seat, the Figure 18 seat has a restraint means formed by a fabric band which is in two parts 390, 392 which are attached to the backrest 352 of the shell 350 in the region of a respective joint between the backrest 352 and the sides 353, 354 of the shell. The restraint band parts 390, 392 can be wrapped around the chest of a baby or small child occupying the seat and their free ends secured together by respective patches of touch-and-close fastener 395, 396 attached adjacent their free ends.

The seat shown in Figure 18 has a removable squab cushion 400 which is wedge-shaped in longitudinal vertical section and provides an upper support surface 402 for a baby or child occupying the seat. The cushion 400 is removably-secured in the view of Figure 19 in such a way that its support surface 402 slopes downwardly in the direction away from the backrest 352 of the seat. The support surface 402 lies at an angle of approximately 120 to the front surface of the backrest 352. In Figure 19 (described in detail hereinafter), the cushion 400 is orientated so that its upper support surface 402 slopes downwardly in the direction towards the backrest 352 and therefore makes a lesser angle of approximately 95 degrees with the backrest in this orientation than it does in the orientation of Figure 1. In the respective orientations, the upper support surface 352 of the squab cushion 350 is orientated appropriately for use by a baby or small child and by a larger child. In the former case the safety seat will normally be rearwardly-facing in the vehicle and forwardly-facing in the latter case.

Figure 19 of the drawings shows the shell 350 fitted to a frame 370 in a forwardly-facing position on a vehicle seat, the squab 357 of which is shown in Figure 19. Except for the shape of its base rails, the frame 370 is identical to the frame shown in Figure 11 and will not be described in further detail. In Figure 19, the squab cushion 400 has been turned through 180 degrees relative to its orientation in Figure 18. The seat has also been fitted with a three-point harness for restraining a larger child, the harness having diagonal and lap strap portions 373, 374 and a buckle tongue part 372. The strap portions 373, 374 are secured at anchorages (not shown) at the rear of the shell 350, the diagonal strap portion 373 passing through a slot 377 in the backrest 352. A further slot at a different location may be provided as in the seat of Figure 11.

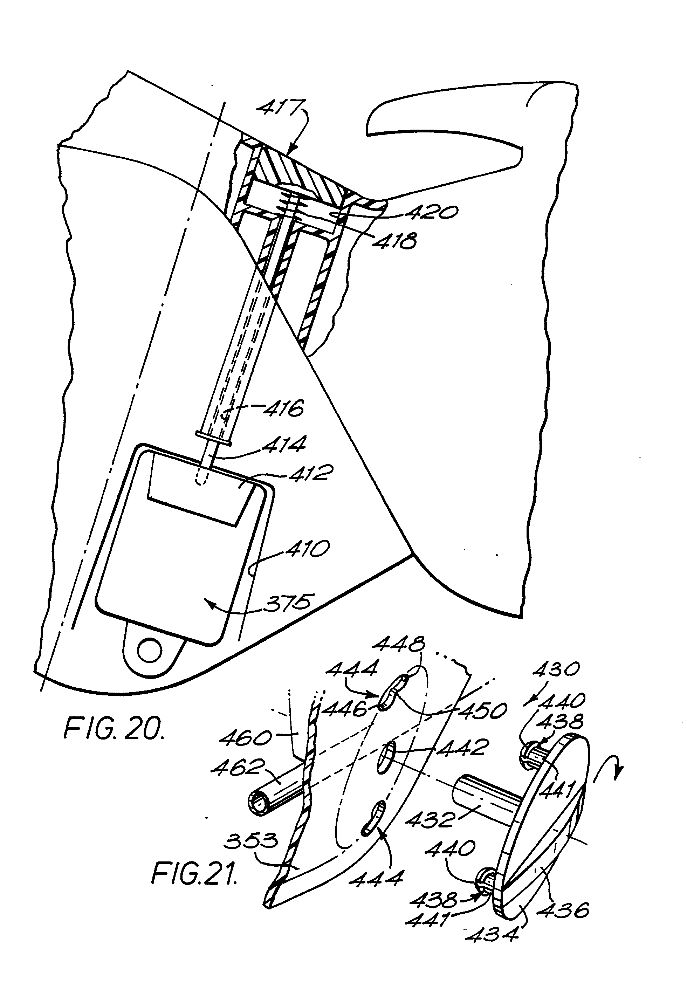

The buckle tongue part 372 is receivable in a socket part 375 which is shown, together with its operating mechanism, in Figure 20 of the drawings. Here it will be seen that the socket part 375 is secured in a recess 410 in the right-hand side wall 354 of the shell 350. The socket part has an operating button 412 which is operable to release the buckle by a push-rod 414 slidable in an integrally-moulded guide 416 of the seat shell 350. The push-rod 414 has at its upper end a release button 416 which can be depressed against the bias of a compression spring 418 in order to depress the release button 412 of the socket part 375 and allow the tongue part 372 to be unlatched therefrom. The release button 412 is located in a recess 420 in the right side wall 354 of the shell 350 and, in its normal position, lies flush with the upper surfaces of that side wall.

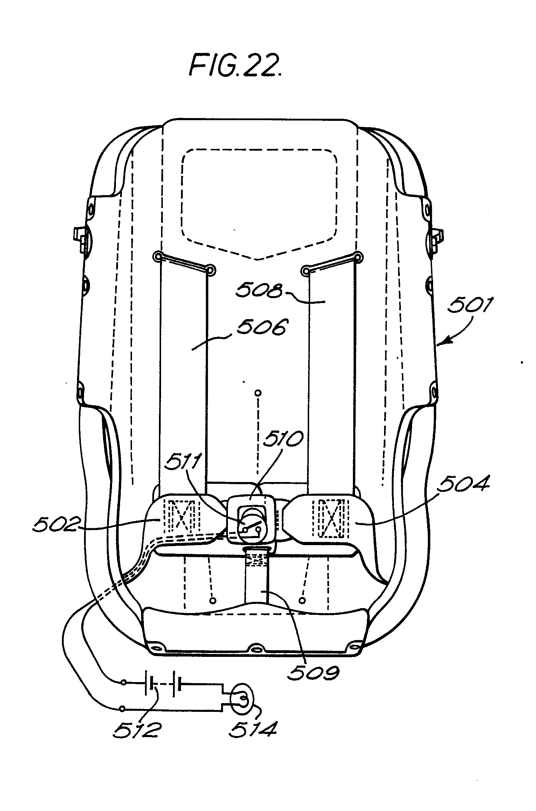

In a modified version of this child's seat, the buckle is connected to an audible or visible alarm device which gives a signal if the buckle tongue and socket parts 372, 375 are separated inadvertently when a baby or child is occupying the seat. A suitable visual alarm system is described below with reference to Figure 22. The warning device may be disabled by a pressure sensor in the backrest 352 so that the warning is not given when the buckle parts are separated and the seat is unoccupied.

The seat shell 350 is securable to the frame 370 of Figure 19 by four locking devices 430, two of which are visible in Figure 19 and the other two of which are similarly positioned at the other side of the seat. One of the devices is shown in detail in Figure 21 and comprises a retaining pin 432 which extends centrally from and perpendicularly to a circular actuating disc 434. The disc 434 has a diametrically-extending ridge 436 on its outer surface to facilitate its being gripped manually. At two diametrically-opposite points on the inner surface of the disc 434, respective circular locating pegs 438 extend parallel to the retaining pin 432 and are themselves each split diametrically and have enlarged end portions 440 and narrower shank portions 441.

The side walls 353, 354 of the shell comprise flap portions which have sets of apertures to receive the retaining pins 432 of the locking devices 430 and also their locating pegs 438. Each set of apertures consists of a central, circular aperture 442 for reception of a retaining pin 432 and a diametrically-opposed pair of second apertures 444 for the locating pegs 438 of the locking device 430. The second apertures 444 are shaped to allow the actuating disc a limited amount of angular movement about the axis of the retaining pin 432. Each aperture 444 accordingly has a larger end portion 446, into which the enlarged heads 440 of the locating pegs 438 can be inserted, and a smaller end portion 448 which is of sufficient size to accept the narrower shank portion 441 of a locating peg 438 but not its enlarged head 440. The two portions are joined by a necked portion 450, through which the locating pegs 438 can be moved when a manual turning force on the actuating disc 434 sufficient to compress the two parts of the pegs 438 and close the slot therebetween is supplied.

Co-operation of the second apertures 444 with the locating pegs 438 secures the retaining pin 432 of each locking device to the shell 350. The pin 432 is initially inserted into the circular aperture 442 and rotated until the pegs 438 are aligned with the larger end portions 446 of the second apertures 444. The pegs 438 can then be inserted into the second apertures 444 and the pin 432 inserted further into central aperture 442. Rotation of the actuating disc 434 in the direction of the arrow A on Figure 21 causes the shank portions 441 of the pegs 438 to be forced through the necked portions 450 and into the smaller end portions where the enlarged heads 440 of the pegs 438 prevent withdrawal of in pins 432 without the actuating disc first being rotated in the direction opposite to the arrow A and the resistance to such rotation provided by the necked aperture portions 450 overcome.

Adjacent each central aperture 442, the shell 350 is formed with an integrally-moulded runner 460 which is positioned to contact a side rail (462 in Figure 21) of the frame 370 when the shell 350 is placed on the frame 370 in the way shown in Figure 19. The shell is held in this position by the retaining pins 432 of the locking devices 430 received in the apertures 442, the pins 432 being disposed to one side of a frame rail 462 and the runners 460 being positioned to the other side. The frame rail 462 is thus trapped between the runners 460 and the retaining pin 432 which are retained by cooperation between the locating pegs 438 and the second apertures 444. In this way, the seat shell 350 is releasably secured to the frame 370.

The seat shown in Figures 18 to 21 is used similarly to the seat shown in Figures 9, 10 and 11, with the exception that the body band 390, 392 is employed to restrain the baby or small child in the rearwardly-facing position of the seat shown in Figure 19, whilst, similarly to seat of Figures 9, 10 and 11, the three-point lap and diagonal harness 372, 273, 374, 375 is used to restrain the larger child when the seat is used in the orientation of Figure 18.

In the Figure 18 orientation, the head support cushion 380 is removed to enlarge the width of the upper part of the shell 350 to accommodate the larger child.

The child's safety seat shown in Figure 22 comprises a seat shell 501 preferably moulded in plastics material in the general form of a bucket seat. The seat mounts restraint means in the form of a harness for restraining its occupant therewithin, the harness comprising webbing providing left and right hand lap belt portions 502, 504 and left and right hand shoulder portions 506, 508, extending from the rear of the shell through respective inclined slots in the back wall of the shell. The shell 501 is provided with fittings for connection to straps by which the seat may be secured on the rear seat straps by which the seat may be secured on the rear seat of a conventional passenger road vehicle, and particulars of these securement arrangements and of other features of the seat, which are not essential elements of the present invention can be obtained by reference to GB-A-1546772.

The ends of the illustrated lap and shoulder belt portions 502, 504, 506, 508 are releasably connected together in use by a two-part buckle 510, as is the upper end of a short belt portion 509 which extends upwardly from the centre of the lower front edge of the shell.

The buckle 410 incorporates a switch 411 which is open when the buckle is fastened, as shown. The switch 511 is connected into circuitry of which the essential elements illustrated comprise a power source 512, conveniently the car battery, and an indicator lamp 514, preferably located on the vehicle dashboard. As long as the buckle 510 is fastened, the switch 511 remains open and the lamp is unilluminated. Just as soon as the buckle 510 is unfastened however the circuit is completed to energize the lamp 514 and thus give a warning that the child is no longer secured.

The switch 511, power source 512 and lamp 514 can also be used to constitute the alarm device of the modified version of the seat of Figures 18 to 21.

## Claims

1. A child's safety seat for use in a vehicle, the seat comprising a seat member having squab and backrest portions, frame means on which the seat member is mounted for movement relative thereto, means for releasably securing the seat member against movement relative to the frame means at a selected relative position of the seat member and the frame means, and operating means for the securing means, the operating means having a manually-actuable member which, upon actuation, releases the securing means and is located remotely from at least one part of the securing means.

2. A child's safety seat according to claim 1, which the manually-actuable member is located at a central part of the forward edge of the squab portion of the seat member.

3. A child's safety seat according to claim 2, in which the manually-actuable member releases the securing means with an action in which the manuallly-actuable member and an adjacent portion of the seat member are squeezed together.

4. A child's safety seat according to any preceding claim, in which the frame means comprises first and second spaced side members on which the seat member is mounted and the securing means comprises first and second latching devices each engageable with a respective frame side member, the latching devices preferably comprising bolts which are receivable in and withdrawable from apertures in the side members, withdrawal preferably taking place against the bias of resilient biassing means.

5. A child's safety seat according to any preceding claim, in which the seat member is mounted on the frame means for pivotal movement relative thereto.

6. A child's safety seat according to claim 5, in which the seat member is pivotable about a transverse axis adjacent the top of the seat member backrest portion.

7. A child's safety seat according to any preceding claim, in which the seat member is mounted on the frame means for sliding movement reactive thereto.

8. A child's safety seat according to claim 7, including rotary elements mounted on the seat member and engaging the frame means, as well as retaining means which retain the seat member on the frame means whilst allowing sliding movement when the securing means are released.

9. A child's safety seat according to claim 8, in which the retaining means comprise load-bearing pins positioned adjacent the rotary elements but spaced therefrom across the said portions of the frame means.

10. A child's safety seat according to any of claims 7 to 9, in which the frame means has, at each side, an upwardly extending portion, which is preferably rectilinear, and a substantially horizontal rectilinear portion, the portions engaging the seat member at upper and lower regions thereof respectively.

11. A child's safety seat for use in a vehicle, the seat comprising a seat member having squab and backrest portions, frame means on which the seat member is mounted for movement relative thereto, and means for releasably securing the seat member against movement relative to the frame means at a selected relative position of the seat member and the frame means, the seat member being mounted on the frame means for pivotal movement about a fixed axis extending transversely of the seat member backrest portion adjacent the upper end thereof, the securing means defining a plurality of relatively-pivoted positions of the frame means and seat member and the seat member being freed for movement from one relative position to another by a lifting movement of the seat member.

12. A child's safety seat according to claim 11, in which the lifting movement of the seat member is provided for by elongate eyes positioned at the rear of the backrest portion of the seat member and receiving a transverse rail of the frame means.

13. A child's safety seat according to claim 11 or 12, in which the securing means comprise a slot in one of the frame means and the seat member and a projection on the other located in the slot and moveable relative thereto along an arcuate path during the relative pivotal movement of the frame means and the seat member, the said relative positions being defined by side arm portions of the slot which receive the projection in the defined relative positions.

14. A child's safety seat according to claim 13, in which there is a slot and a projection at each side of the seat, the slots being defined in the seat member and the projections being in the form of studs on the frame means, to which studs anchoring straps of the child's seat are attachable, preferably by respective manually-rotatable elements screw-threaded onto the studs over end brackets of the anchoring straps.

15. A child's safety seat for use in a vehicle, the seat comprising a seat member having squab and backrest portions, frame means on which the seat member is mounted for movement relative thereto, and means for releasably securing the seat member against movement relative to the frame means at a selected relative position of the seat member and the frame means, the securing means comprising a pair of rails at at least one side of the seat member and forming portions of the frame means, the rails being spaced along their length, an element protruding from the seat member into the space between the or each pair of rails, and a clamping element which can be secured to the seat member and has means whereby the rails can be releasably clamped between the clamping element and the protruding element.

16. A child's safety seat according to claim 15, in which the clamping means comprise a manually-rotatable element which is preferably screw-threaded on a post projecting from the protruding element between the rails and passes through an opening in the clamping element.

17. A child's safety seat according to claim 15 or 16, in which the rails are circular in section and the protruding and clamping elements preferably have inclined surfaces which, in their clamping positions, contact the rails tangentially.

18. A child's safety seat according to any of claims 15 to 17, in which one attachment between the seat member and the frame means is formed by the clamping means and another attachment comprises a slot in one of the frame means and the seat member and a projection on the other located in the slot to guide the seat member relative to the frame means.

19. A frame for a child's safety seat, the frame comprising first and second frame members formed from elongate material and each being shaped so as to have a mid portion and first and second terminal portions extending from the mid portion to respective ends of the frame member, the terminal portions of each member being secured adjacent their ends to the other member in such a way that mid portions of the first and second frame members form, respectively, an upper, rear transverse rail and a lower, front transverse rail of the frame and that the terminal portions of the frame members form left- and right-hand side structures of the frame.

20. A frame according to claim 19, in which the terminal portions of one frame member each comprise a first part which is positioned to contact a support surface when the frame is supported thereon, and a second part which extends upwardly from the rearward end of the first part to the point of securement to the other frame member.

21. A frame according to claim 20, in which the terminal portions of the other frame member provide guideways on which a seat member can be mounted for sliding movement.

22. A frame according to claim 20 or 21, in which the terminal portions of the first frame member are secured adjacent their ends to points on the terminal portions of the second frame member adjacent the junction of the terminal portions with the mid portion of the second member, the terminal portions of the second frame member being secured adjacent their ends to points on the terminal portions of the first frame member between their junctions with the mid portion of the first frame member and their free ends.

23. A child's safety seat for use in a vehicle, the seat having means for securement of the seat in a vehicle, the securement means comprising first and second tensionable elements extending from respective opposite sides of the seat to respective means for attachment to a run of a vehicle safety belt.

24. A child's safety belt according to claim 23, in which each tensionable element is an elongate flexible element such as a length of webbing.

25. A child's safety seat according to claim 24, in which the elements are preferably tensionable by one or more devices provided in the elements for adjustment of their lengths.

26. A child's safety seat according to any of claims 23 to 25, in which the means for attachment to a safety belt comprise loops through which the safety belt can be passed, the loops preferably being in stirrup elements each having a rigid rectilinear portion for contacting one face of the safety belt.

27. A child's safety seat for use in a vehicle, the safety seat comprising a seat member having squab and backrest portions, support means which allow the seat member to be supported on a vehicle seat in a rearwardly-facing position and means permitting securement of the so-supported seat member in a vehicle, the securement means comprising means for engagement with an adult seat belt provided for an occupant of a seat on which the seat member is supported and the support means comprising a U-shaped member which is removably connected at its free ends to the seat member at the rear of its backrest portion, preferably by the free ends of the U-shaped support member being removably receivable in sockets in the backrest portion.

28. A child's safety seat according to claim 27, including a frame on which the seat member can be removably mounted in a forwardly facing position.

29. A child's safety seat according to claims 27 or 28, in which the seat member has one or more removable portions for adjustment of the internal size of the seat member.

30. A child's safety seat which has a seat member having squab and backrest portions and a harness for restraining an occupant of the seat, the harness having lap and diagonal portions which extend to a tongue part of a buckle, the tongue part being receivable in a socket part incorporated in the seat member.

31. A child's safety seat which has means for its being mounted in a vehicle selectively in a rearwardly-facing position and in a forwardly-facing position, the safety seat comprising a seat member which has squab and backrest portions providing respective child-support surfaces, the seat member having first and second conditions in which the child-support surfaces of the squab and backrest extend generally in planes which make respectively greater and lesser angles with each other and the two conditions being attainable by means of a removable squab portion which can be secured selectively in the seat member in first and second positions thereof.

32. A child's safety seat according to claim 31, in which the angle between the squab and backrest in the first condition is in the range 110 to 130 degrees, preferably about 120 degrees.

33. A child's safety seat according to claim 31 or 32, in which the angle between the squab and backrest in the second condition is in the range of 85 to 105 degrees, preferably about 95 degrees.

34. A child's safety seat according to claim any of claims 31 to 33, in which the removable portion has a wedge shape and is turned through approximately 180 degrees between its two positions.

35. A child's safety restraint system for use in a vehicle, the system comprising restraint means, for example a buckle, a sensor for sensing whether or not the restraint means is in use, and an indicator responsive to the sensor to indicate whether or not the restraint means is in use.

36. A child's safety restraint system according to claim 35, including means for disabling the sensor when the restraint means is not in use.

37. A child's safety seat having a seat member, having a part shaped for occupation by a baby or child, the seat including means for selective alteration of the size and/or the shape of the occupation part of the seat member.

38. A child's safety seat according to claim 37, in which the said means comprise one or more removable members, preferably cushion members, the absence and presence of which modifies the width of the seat member in the region occupied by an occupant's head and/or the torso of the occupant.

39. A child's safety seat comprising a seat member and frame means on which the seat member can be detachably mounted, the seat member being retained on the frame means by means comprising an abutment at one side of a frame part and a retaining member at the other side of the frame part, the retaining member being movable between first and second positions in which the shell is respectively retained on the frame means by the frame part being trapped between the retaining member and the abutment and removable from the frame means.

40. A child's safety seat according to claim 39, in which the retaining member is removable from the seat in its second position.

41. A child's safety seat according to claim 39 or 40, in which the retaining member comprises a retaining pin, which can be inserted into a aperture in the seat member, and means for releasable engagement with the seat member.

42. A child's safety seat according to claim 41, in which the means for releasable engagement comprise a peg on one of the retaining and seat members and an aperture in the other member, the peg being insertable into the aperture and co-operable therewith to reduce the releasable engagement.

43. A child's safety seat according to clam 42, in which the peg has a head portion and a thinner shank portion, the head portion being dimensioned to pass through a first part of the aperture and being moved to a second part of the aperture by movement of the retaining pin, the second aperture part being large enough to receive the shank of the peg but not large enough to allow all the head to pass through, and the aperture parts being joined by a wasted portion through which the shank can pass against a resistance when being moved between the first and second apertures parts.
